# EUROPEAN PATENT SPECIFICATION

(11) **EP 1 948 346 B1**
(45) Date of publication and mention of the grant of the patent: **31.12.2008**
(21) Application number: 06792438.1
(22) Date of filing: 20.10.2006
(51) Int. Cl.: B01D 39/20

(54) **FILTER CARTRIDGE FOR WATER PURIFICATION**
FILTERPATRONE ZUR WASSERREINIGUNG
CARTOUCHE FILTRANTE POUR ÉPURATION DES EAUX

(30) Priority: 22.11.2005 IN MU14522005; 12.01.2006 EP 06075057
(43) Date of publication of application: 30.07.2008
(73) Proprietor: Unilever N.V., 3013 AL Rotterdam (NL); Unilever PLC, London Greater London EC4P 4BQ (GB)
(72) Inventor: MISTRY, Mahendrakumar, Maganlal, Mumbai 400 099 (IN); MUKHERJEE, Nikhileshwar, Mumbai 400 099 (IN); SRIVASTAVA, Madalasa, Mumbai 400 099 (IN)
(74) Representative: Rosen Jacobson, Frans Lucas M.
(86) International application number: PCT/EP2006/010136
(87) International publication number: WO 2007/059832

(56) References cited:
- WO-A-20/05094966
- WO-A-20/05095284
- GB-A- 2 390 987
- US-B1- 6 368 504

## Description

### FIELD OF INVENTION

The present invention relates to a filter cartridge for filtration of water and more particularly to a cost-effective filter cartridge for gravity filtration of water substantially free of particulate contaminants including microorganisms like cysts while consistently providing for relatively high flow rates of output water.

### BACKGROUND AND PRIOR ART

Water typically contains contaminants, which include particulate matter, chemicals and microorganisms. In potable water, it is especially desirable to remove the harmful contaminants from the liquids before consuming them for maintenance of good health.

Several different methods are known for purification of water based on which many devices and apparatus have been designed and are also commercially available. These methods and devices vary depending on the type of impurities present in water.

Particulate matter generally larger than 3 microns are filtered using either a cloth filter or a depth filter e.g. a bed of activated carbon or clay which has been moulded into a block. Carbon and clay additionally have the advantage of being highly porous materials which also facilitates the removal of soluble impurities by adsorption e.g. dissolved organic compounds, compounds that make the water have an offensive odour and taste, pesticide and pesticide residues etc. Water available in many remote water-scarce parts of the world are highly contaminated with soil which includes iron and aluminium oxides and hydroxides.

The present inventors have experienced that the presently available filter cartridges having carbon blocks get choked very frequently when used, especially in gravity water filters and provide very low flow rates of water, after some use, which is undesirable by the consumer. Upon such choking, the consumer often tries to rejuvenate the cartridge by agitating in water or backflushing. The presently available filter cartridges are difficult to rejuvenate. Thus the consumer is required to replace the filter cartridge with a new filter cartridge which is cost extensive. The present inventors in the co-pending application 801/MUM/2005 (or its equivalent WO2007/003259) have sought to solve this problem by providing a filter cartridge which provides consistently high flow rates of water of desired quality, while providing the ease of cleaning and replacement of the carbon blocks provided therein, while ensuring that the overall cost of the cartridge is minimized.

The co-pending application provides for a filter cartridge for filtration of water comprising a carbon block that is seated in a receptacle having an orifice for outlet of water wherein said carbon block is detachably attachable in said receptacle using a fastening means and a gasket means such that all inlet water passes through said carbon block before exiting said filter cartridge.

While the invention of the co-pending application provides for a cost-effective filter cartridge for filtration of water while giving high flow rates and good filtration efficacy, it was observed that the flow rate of output water was not as consistent as desired. This problem was observed to be more acute when the filter was kept idle for some period of time. After extensive experimentation, the present inventors have developed a novel solution to the problem which ensures that the filter cartridge is modified to provide for consistently high flow rates.

It is thus the basic object of the present invention to provide for a cost-effective filter cartridge which ensures desired particulate removal including micro-organisms like cysts while giving the desired high flow rate more consistently over a larger volume of inlet water, as compared to the prior art cartridges.

### SUMMARY OF THE INVENTION

According to the present invention there is provided a filter cartridge for filtration of water comprising a carbon block that is seated in a receptacle wherein said carbon block is detachably attachable in said receptacle using a fastening means and a gasket means wherein said filter cartridge comprises a collection chamber positioned below the carbon block in the receptacle for holding the water that exits the carbon block, said collection chamber comprising:
(a) a dome shaped holder plate provided with at least one water discharge port, said plate positioned in close proximity to the carbon block,
(b) an outlet nozzle for water having an inlet and outlet end, said inlet end positioned in close proximity to the under side of said plate
such that all the water passing through the carbon block collects in the space between the top of the plate and the carbon block before exiting through the discharge port to fill the collection chamber and exit through the nozzle.

It is particularly preferred that the carbon block is a carbon disc.

### DETAILED DESCRIPTION OF THE INVENTION

The present inventors observed that especially when the carbon block of the co-pending application 801/MUM/2005 was idle for periods of time, the out put flow rate of the water exiting the filter cartridge was inconsistent. Without wishing to be bound by theory, the inconsistent flow rate is attributed to the problem of 'air-lock'. Air-lock is a severe problem which is observed in many low-pressure (including gravity fed) filtration apparatus, especially in those operating in the down flow mode. When such filters are kept idle for periods of time, air enters into the cavities of the water flow path. Subsequently when the filter cartridge is again used to filter water, the air being lighter than water gets trapped as bubbles in the cavities of the filter especially close to the underside of the filtration media, (the carbon block, in the present invention) and provide a back pressure and loss of filtration surface area, both of which contribute to the reduction in the flow rate of water. The present inventors have developed a filtration cartridge which is believed to minimize this problem thereby leading to consistently high filtration rates.

It is believed that the constructional features provided for in this invention viz. the dome shaped holder plate (HP) positioned close to the carbon block, the water discharge port (DP) on said plate, and the outlet nozzle (ON) for water having an inlet inlet end positioned in close proximity to the under side of said plate, all work effectively in tandem to ensure that the filter cartridge of the invention provides the desired high flow rates consistently over time. Further, it is believed that when air is entrapped downstream of the carbon block, the construction features of the invention ensures effective coalescence of the bubbles into a single air bubble which is directed towards a small volume close to the inlet end of the outlet nozzle. Additionally the filtered water first collects on said plate, free of dispersed air bubbles and the pressure exerted by the collected water ensures that the single air bubble is first pushed out through the exit nozzle, thereby ridding the filter cartridge of the "air-lock" problem, thus providing an elegent and effective solution to this problem.

A highly preferred carbon block of the invention is a carbon disc. The disc may have a circular, oval, square or polygonal cross-section, preferably a circular cross-section. When a carbon disk is used, it is preferred that the dimensions are such that the ratio of the longest dimension to the thickness is in the range of 2:1 to 20:1, more preferably 3:1 to 15:1.

The collection chamber in the receptacle of the filter cartridge comprises a dome shaped holder plate which is in close proximity to the underside of the carbon block. The holder plate preferably has corrugations with troughs and peaks. The troughs form grooves on the upper side of the holder plate. The grooves are preferably spirally oriented. The holder plate has at least one water discharge port, preferably 2 and more preferably 4 or more. The collection chamber also comprises an outlet nozzle for water, which has an inlet end and an out let end. The inlet end of the outlet nozzle is in close proximity to the underside of the holder plate, preferably positioned approximately equidistant from the periphery of the dome shaped holder plate.

The fastening means may be a closure which may be snap fit on to the receptacle or a clamp which holds the carbon block on to the receptacle. The gasket means may be a gasket, an o-ring or any other means which serves the purpose of a gasket which provides leak tightness to water when a fastening means is used to fasten two articles together.

According to a preferred aspect of the invention, the fastening means is a screw-threaded closure, which comprises an orifice for inlet of water and is screwable on to the receptacle housing the carbon block. The receptacle is provided with corresponding screw threads for urging the carbon block against the gasket means provided in the base of the receptacle thereby attaching the carbon block in the filter cartridge. The closure may be provided on its bottom surface with downwardly projecting members which are urged against the top surface of the carbon block, as the closure is screwed on to the receptacle thereby urging the bottom surface of the carbon block against the gasket means placed in the base of the receptacle thereby ensuring the necessary leak tightness. When the carbon block is desired to be detached from the filter cartridge, the closure is unscrewed from the receptacle thereby releasing the carbon block. One or more orifices are provided on the closure for inlet of water on to the carbon block. It is preferred that the orifice comprises at least 30% of the surface area of the top surface of the closure.

The invention is especially suitable and configured to be capable of filtering water which is contaminated with particles including dust and microorganisms e.g. protozoan cyst like cryptosporidium and Giardia. The invention is capable of 99% removal (two log removal) preferably 99.9% removal (three log removal) of cyst. Log removal is defined as the log₁₀ of the number of input particles minus the log₁₀ of the number of output particles. The carbon blocks are made from activated carbon, more preferably powder activated carbon.

It is desirable to include a replaceable sediment filter that externally envelops the carbon block such that water passes through the sediment filter before passing through the carbon block. The sediment filter preferably corresponds to the shape of the carbon block. The sediment filter may be washable or replaceable and is preferably a woven or non-woven fabric, more preferably a non-woven fabric having micropores. This sediment filter ensures filtration of particles generally above 3 microns. The sediment filter can be washed and rinsed under flowing tap water with mild scrubbing.

The receptacle and the fastening means are preferably made of polymeric materials. Preferred polymeric materials include polypropylene, polyethylene, acrylonitrile butadiene styrene, or styrene acrylonitrile. The gasket means is preferably made from natural or synthetic rubber, synthetic elastomers, teflon, nitrile rubber or silicone.

The term carbon block is used to denote a block prepared using activated carbon particles bound together using polymeric binders under the action of heat and pressure. The term polymeric binder is preferably a binder having a melt flow rate (MFR) less than 5 g/ 10 minutes, preferably less than 2 g/ 10 minutes, more preferably less then 1 g/ 10 minutes. The melt-flow rate (MFR) is measured using ASTM D 1238 (ISO 1133) test. Bulk density of the binder used as per the invention is preferably less than or equal to 0.6 g/cm³, more preferably less than or equal to 0.5 g/cm³, and further more preferably less than or equal to 0.25 g/cm³.

The carbon block preferably comprises powder activated carbon (PAC) having a particle such that not more than 5% medium passes through a sieve of 200 mesh and not more than 5% is retained on a sieve of 12 mesh. The PAC is preferably selected from bituminous coal, coconut shell, wood, or petroleum tar. The surface area of the PAC is preferably selected such that it exceeds 500 m²/g, more preferably exceeds 1000 m²/g.

Preferably, the PAC has a size uniformity co-efficient of less than 2, or more preferably less than 1.5, a carbon tetrachloride number exceeding 50%, more preferably exceeding 60%. The PAC preferably has an lodine number greater than 800, more preferably greater than 1000.

The proportion of the binder material to the PAC particles by weight is chosen such that it is preferably in the range of 1:1 to 1:10, more preferably in the range of 1: 2 to 1:6.

By way of the above filter cartridge of the invention it is possible to attain average flow rate of water, from a starting height of 200 mm down to 50 mm, under gravity of 600-50 ml/min., preferably 200-50 ml/min., without compromising on the requirements of removal of particulate including microorganisms, and chemical contaminants.

According to another aspect of the present invention there is provided a method of obtaining filtered water at flow rates in the range of 50 to 600 ml/minute comprising the steps of
(i) filtering water through a filter cartridge of the invention; and
(ii) replacing the carbon block in the filter cartridge whenever the flow rate of water is below desired value with a block which provides the desired flow rate.

The present invention facilitates easy removal of the carbon block from the cartridge to rejuvenate it, after which the carbon block is easily re-attachable in the cartridge.

The details of the invention, its objects and advantages are explained hereunder in greater detail in relation to the following non-limiting exemplary embodiments of the invention:

### BRIEF DESCRIPTION OF THE DRAWINGS

In the drawings,
**Fig. 1** is a schematic of a filter cartridge of the invention with a carbon disc filter assembled in a receptacle comprising a dome shaped holder plate and an outlet nozzle.
**Fig. 2** is a schematic of the detailed construction of a typical dome shaped holder plate with corrugations.

### DETAILED DESCRITION OF THE DRAWINGS

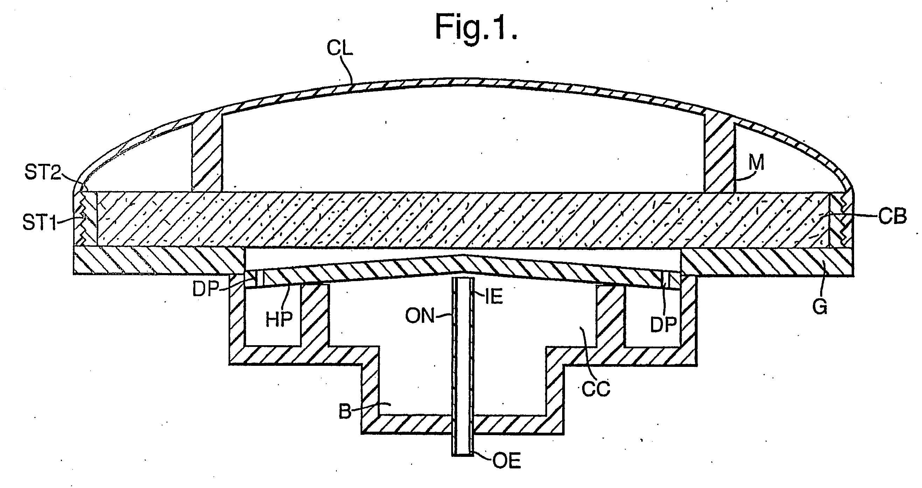

Referring to Fig.1, the filter cartridge comprises a carbon disk (CB) seated on a gasket (G) provided in the base of a receptacle (R) which has a collection chamber (CC) provided with a dome shaped holder plate (HP) and an outlet nozzle (ON) for outlet of water. The outlet nozzle has an inlet end (IE) and an outlet end (OE). The dome shaped holder plate is positioned close to the underside of the carbon block. The dome shaped holder plate has two discharge ports (DP) at or close to the peripheral ends of the plate. The inlet end (IE) of the outlet nozzle is positioned close to the underside of the dome shaped holder plate, preferably equidistant from the peripheral ends. The receptacle has a closure (CL) which has an orifice on the top surface (not shown) for inlet of water. The closure has screw threads (ST1) with which it is screwed on to the receptacle provided with corresponding screw threads (ST2). Downwardly projecting members (M) are provided on the closure for urging the carbon disk against the gasket as the closure is screwed on to the receptacle. The gasket ensures leak-proof outlet such that all the water fed to the filter cartridge passes though the carbon block before exiting it.

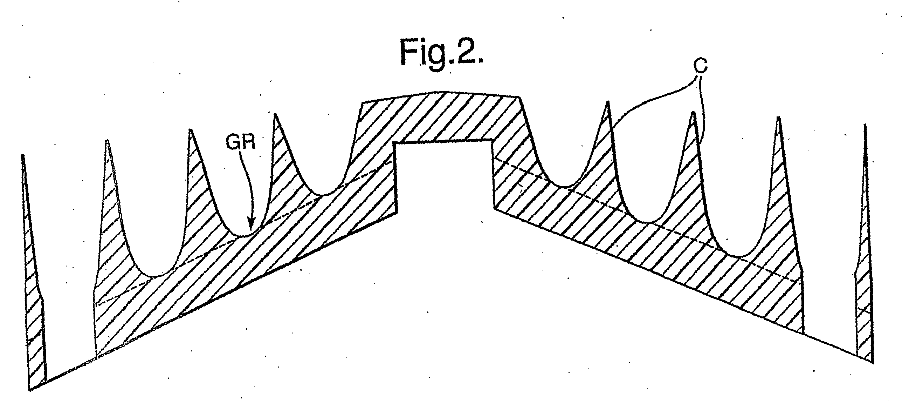

Referring to Figure 2, the dome shaped holder plate has corrugation (C) on the upper side forming grooves (GR).

When in use, the water enters the closure (CL) through the orifice provided thereon (not shown) and flows through the carbon disk (CB) enabling filtration and firsts collects in the space between the carbon disk and the dome shaped holder and exits into the bottom part (B) of the collection chamber through the discharge ports (DP). The water collects and fills the collection chamber. When the water is filled to the height of the inlet end (IE) of the outlet nozzle (ON), the water enters the outlet nozzle through the inlet end (IE), flows in the downward directions and exits the filter cartridge through the outlet end (OE) of the outlet nozzle.

Thus the invention provides for a filter cartridge which ensures desired particulate removal while giving the high desired flow rate of water very consistently over larger volumes of water while providing a higher efficiency in terms of the amount of water filtered for a given amount of carbon.

## Claims

1. A filter cartridge for filtration of water comprising a carbon block (CB) that is seated in a receptacle (R) wherein said carbon block is detachably attachable in said receptacle using a fastening means and a gasket means (G) wherein said filter cartridge comprises a collection chamber (CC) positioned below the carbon block in the receptacle for holding the water that exits the carbon block, **characterized in that** said collection chamber comprises
(a) a dome shaped holder plate (HP) provided with at least one water discharge port (DP) at the peripheral end of the plate, said plate being positioned in close proximity to the carbon block (CB),
(b) an outlet nozzle (ON) for water having an inlet (IE) and outlet end (OE), said inlet end positioned in close proximity to the under side of said plate
such that all the water passing through the carbon block collects in the space between the top of the plate and the carbon block before exiting through the discharge port (DP) to fill the collection chamber (CC) and exit through the nozzle (ON), wherein the inlet end of said nozzle is equidistant from the periphery of the holder plate.

2. A filter cartridge as claimed in any one of the preceding claims **characterized in that** said carbon block is a carbon disk.

3. A filter cartridge as claimed in claim 1 or claim 2 **characterized in that** said plate is provided on the upper side with corrugations (C) such that water collected in the grooves (GR) of the corrugations leads to the water discharge port.

4. A filter cartridge as claimed in claim 3 **characterized in that** said grooves are spirally oriented.

5. A filter cartridge as claimed in any one of the preceding claims wherein said fastening means is a screw threaded closure **characterized by** comprising an orifice for inlet of water and is screwable on to said receptacle provided with corresponding screw threads (ST1 and ST2) for urging said carbon block against said gasket provided in the base of the receptacle.

6. A filter cartridge as claimed in any one of the preceding claims **characterized in that** said receptacle and said fastening means are made of materials selected from polymers which includes polypropylene, polyethylene, acrylonitrile butadiene styrene, or styrene acrylonitrile.

7. A filter cartridge as claimed in any one of the preceding claims **characterized in that** said gasket means is made from natural or synthetic rubber, synthetic elastomers, teflon, nitrile rubber or silicone,

8. A method of obtaining filtered water at flow rates in the range of 50 to 600 ml/minute comprising the steps of
i. filtering water through a filter cartridge as claimed in any one of the preceding claims; and
ii. replacing the carbon block in the filter cartridge whenever the flow rate of water is below desired value with a block which provides the desired flow rate.

9. Use of the filter according to anyone of claims 1-7 for obtaining a more than two log removal of cyst.

## Patentansprüche

1. Filterpatrone zum Filtern von Wasser, die einen Kohlenstoffblock (CB) enthält, der in einem Aufnahmebehälter (R) sitzt, wobei der Kohlenstoffblock in dem Aufnahmebehälter unter Verwendung eines Befestigungsmittels und eines Dichtungsmittels (G) lösbar befestigbar ist, wobei die Filterpatrone eine Sammelkammer (CC) umfasst, die unter dem Kohlenstoffblock in dem Aufnahmebehälter positioniert ist, um das Wasser, das aus den Kohlenstoffblock austritt, zurückzuhalten, **dadurch gekennzeichnet, dass** die Sammelkammer umfasst:
(a) eine kuppelförmige Halterplatte (HP), die mit wenigstens einem Wasserauslassanschluss (DP) am Umfangsende der Platte versehen ist, wobei die Platte sehr nahe bei dem Kohlenstoffblock (CB) positioniert ist,
(b) eine Auslassdüse (ON) für Wasser, die ein Einlassende (IE) und ein Auslassende (OE) besitzt, wobei das Einlassende sehr nahe bei der Unterseite der Platte positioniert ist, derart, dass das gesamte Wasser, das sich durch den Kohlenstoffblock bewegt, in dem Raum zwischen der Oberseite der Platte und dem Kohlenstoffblock gesammelt wird, bevor es durch den Auslassanschluss (DP) austritt, um die Sammelkammer (CC) zu füllen und um durch die Düse (ON) auszutreten, wobei das Einlassende der Düse in Bezug auf den Umfang der Halterplatte äquidistant angeordnet ist.

2. Filterpatrone nach einem der vorhergehenden Ansprüche, **dadurch gekennzeichnet, dass** der Kohlenstoffblock eine Kohlenstoffscheibe ist.

3. Filterpatrone nach Anspruch 1 oder 2, **dadurch gekennzeichnet, dass** die Platte an der oberen Seite mit Riffelungen (C) versehen ist, derart, dass Wasser, das in den Rillen (GR) der Riffelungen gesammelt wird, zu dem Wasserauslassanschluss fließt.

4. Filterpatrone nach Anspruch 3, **dadurch gekennzeichnet, dass** die Rillen spiralförmig angeordnet sind.

5. Filterpatrone nach einem der vorhergehenden Ansprüche, wobei das Befestigungsmittel ein Schraubgewindeverschluss ist, der **dadurch gekennzeichnet ist, dass** er eine Öffnung für den Einlass von Wasser aufweist und mit dem Aufnahmebehälter, der mit entsprechenden Schraubgewinden (ST1 und ST2) versehen ist, verschraubbar ist, um den Kohlenstoffblock gegen die Dichtung, die in der Bodenplatte des Aufnahmebehälters vorgesehen ist, zu drängen.

6. Filterpatrone nach einem der vorhergehenden Ansprüche, **dadurch gekennzeichnet, dass** der Aufnahmebehälter und das Befestigungsmittel aus Materialien hergestellt sind, die ausgewählt sind aus Polymeren, die Polypropylen, Polyethylen, Acrylonitril-Butadien-Styrol oder Styrol-Acrylonitril umfassen.

7. Filterpatrone nach einem der vorhergehenden Ansprüche, **dadurch gekennzeichnet, dass** das Dichtungsmittel aus natürlichem oder synthetischem Kautschuk, synthetischen Elastomeren, Teflon, Nitrilkautschuk oder Silikon hergestellt ist.

8. Verfahren zum Erhalten von gefiltertem Wasser bei Durchflussmengen im Bereich von 50 bis 600 ml/Min, das die folgenden Schritte umfasst:
i. Filtern von Wasser durch eine Filterpatrone nach einem der vorhergehenden Ansprüche; und
ii. Ersetzen des Kohlenstoffblocks in der Filterpatrone, sobald bei einem Block, der eine Solldurchflussmenge ermöglicht, die Durchflussmenge von Wasser unter dem Sollwert liegt.

9. Verwendung des Filters nach einem der Ansprüche 1-7, um eine mehr als 99 %-ige Entfernung von Zysten zu erzielen.

## Revendications

1. Cartouche filtrante pour l'épuration des eaux comprenant un bloc de carbone (CB) reposant dans un réceptacle (R), dans laquelle ledit bloc de carbone peut être fixé de façon amovible dans ledit réceptacle en utilisant un moyen de fixation et un moyen de joint (G), dans laquelle ladite cartouche filtrante comprend une chambre de collecte (CC) positionnée au-dessous du bloc de carbone dans le réceptacle pour contenir l'eau sortant du bloc de carbone, **caractérisée en ce que** ladite chambre de collecte comprend :
(a) une plaque de support en forme de dôme (HP) dotée d'au moins un orifice d'évacuation d'eau (DP) à l'extrémité périphérique de la plaque, ladite plaque étant positionnée à proximité étroite du bloc de carbone (CB) ;
(b) une buse de sortie (ON) pour l'eau comportant une extrémité d'entrée (IE) et une extrémité de sortie (OE),
ladite extrémité d'entrée positionnée à proximité étroite en dessous de ladite plaque, de telle sorte que toute l'eau passant à travers le bloc de carbone soit recueillie dans l'espace entre le sommet de la plaque et le bloc de carbone avant de sortir à travers l'orifice d'évacuation (DP) pour remplir la chambre de collecte (CC) et sortir à travers la buse (ON), dans laquelle l'extrémité d'entrée de ladite buse est équidistante de la périphérie de la plaque de support.

2. Cartouche filtrante selon l'une quelconque des revendications précédentes, **caractérisée en ce que** ledit bloc de carbone est un disque de carbone.

3. Cartouche filtrante selon la revendication 1 ou 2, **caractérisée en ce que** ladite plaque est dotée sur le côté supérieur d'ondulations (C) de telle sorte que l'eau recueillie dans les rainures (GR) des ondulations aille vers l'orifice d'évacuation de l'eau.

4. Cartouche filtrante selon la revendication 3, **caractérisée en ce que** lesdites rainures sont orientées en spirale.

5. Cartouche filtrante selon l'une quelconque des revendications précédentes, dans laquelle ledit moyen de fixation est une fermeture à vis filetée, **caractérisée en ce qu'**elle comprend un orifice pour l'entrée d'eau et peut être vissée sur ledit réceptacle doté de filets de vis (ST1 et ST2) correspondants pour pousser ledit bloc de carbone contre ledit joint disposé dans la base du réceptacle.

6. Cartouche filtrante selon l'une quelconque des revendications précédentes, **caractérisée en ce que** ledit réceptacle et ledit moyen de fixation sont constitués de matériaux sélectionnés parmi les polymères comprenant le polypropylène, le polyéthylène, l'acrylonitrile butadiène styrène, ou le styrène acrylonitrile.

7. Cartouche filtrante selon l'une quelconque des revendications précédentes, **caractérisée en ce que** ledit moyen de joint est constitué de caoutchouc naturel ou synthétique, élastomères synthétiques, téflon, caoutchouc nitrile ou silicone.

8. Méthode d'obtention d'eau filtrée à des débits réduits dans la plage de 50 à 600 ml/minute, comprenant les étapes consistant à :
i. filtrer l'eau à travers une cartouche filtrante selon l'une quelconque des revendications précédentes ; et
ii. remplacer le bloc de carbone dans la cartouche filtrante chaque fois que le débit d'eau est inférieur à la valeur désirée par un bloc offrant le débit désiré.

9. Utilisation du filtre selon l'une quelconque des revendications 1 à 7, pour obtenir une élimination des kystes de plus de deux fois.
